# EUROPEAN PATENT SPECIFICATION

(11) **EP 3 865 562 B1**
(45) Date of publication and mention of the grant of the patent: **03.05.2023**
(21) Application number: 19874155.5
(22) Date of filing: 03.09.2019
(51) Int. Cl.: C12C 1/12, C12C 12/00

(54) **MALT FORMULA OF BITTER AND REFRESHING-TYPE WHOLE WHEAT PILSENER, RESULTANT BEER AND PREPARATION METHOD THEREFOR**
MALZFORMEL VON BITTEREM UND ERFRISCHENDEM WEIZENVOLLKORNPILSENER, SO ERHALTENES BIER UND HERSTELLUNGSVERFAHREN DAFÜR
FORMULE DE MALT DE BIÈRE PILS TOUT GRAIN DE TYPE AMER ET RAFRAÎCHISSANT, BIÈRE RÉSULTANTE ET PROCÉDÉ DE FABRICATION CORRESPONDANT

(30) Priority: 16.10.2018 CN 201811203931
(43) Date of publication of application: 18.08.2021
(73) Proprietor: Tsingtao Brewery Co., Ltd., Shibei District Qingdao, Shandong 266000 (CN)
(72) Inventor: DONG, Jianjun, Qingdao, Shandong 266000 (CN); YIN, Hua, Qingdao, Shandong 266000 (CN); XING, Lei, Qingdao, Shandong 266000 (CN); QIAN, Zhonghua, Qingdao, Shandong 266000 (CN); CHANG, Zongming, Qingdao, Shandong 266000 (CN); HUANG, Shuli, Qingdao, Shandong 266000 (CN); HU, Xiaocong, Qingdao, Shandong 266000 (CN); LIU, Xiaolin, Qingdao, Shandong 266000 (CN); YANG, Zhaoxia, Qingdao, Shandong 266000 (CN); HU, Shumin, Qingdao, Shandong 266000 (CN)
(74) Representative: J A Kemp LLP
(86) International application number: PCT/CN2019/104106
(87) International publication number: WO 2020/078129

(56) References cited:
- WO-A1-2014/207542
- CN-A- 1 034 955
- CN-A- 101 724 524
- CN-A- 105 482 932
- CN-A- 105 647 717
- CN-A- 108 102 825
- CN-A- 108 504 480
- CN-A- 109 135 977
- CN-A- 109 207 288
- CN-B- 105 087 204
- DE-A1-102009 023 209
- US-A1- 2008 008 776
- US-A1- 2010 310 715
- Anonymous: "Spalter select", , 29 December 2017 (2017-12-29), pages 1-1, XP055859364, Retrieved from the Internet: URL:http://www.hopslist.com/hops/aroma-hop s/spalter-select/ [retrieved on 2021-11-09]
- Anonymous: "Citra", , 9 June 2017 (2017-06-09), pages 1-1, XP055859388, Retrieved from the Internet: URL:http://www.hopslist.com/hops/dual-purp ose-hops/citra/ [retrieved on 2021-11-09]
- D. E. Briggs ET AL: "Brewing: Science and Practice", , 1 January 2004 (2004-01-01), XP055435010, Retrieved from the Internet: URL:http://fars.itvhe.ac.ir/_fars/Document s/99ae7cc8-c9a8-4356-8d24-f6c208322cb7.pdf [retrieved on 2017-12-13]
- Wang Wenfu , Tang Shiwen: "Application Characteristics of Special Malts", Beer Production Process, 28 February 1997 (1997-02-28), pages 124-126, XP009527616, ISBN: 7-5019-1981-X
- Wu xia , Li Rong: "Analysis of the Types of Beer", Modern Food, vol. 9, no. 17 , pages 76-78, XP055805241, ISSN: 1007-3582, DOI: 10.16736/j.cnki.cn41-1434/ts.2017.17.027

## Description

### TECHNICAL FIELD

The present application generally relates to the field of beer technology, and in particular relates to a malt recipe of bitter and refreshing type whole malt pilsner beer, an obtained beer and a preparation method thereof.

### BACKGROUND ART

Pilsner beer is the first Lager beer in the world and the largest-selling beer in Europe. It has high bitterness unit, which is usually 20-30 EBC, and has the characteristics of bitterness, refreshment and sweetness after taste, especially its bitterness coordination and refreshment are the key indicators to make it different from other Lager beers.

At present, the ordinary Lager beers in domestic have a bitterness unit of 6 to 12 EBC and have poor bitterness coordination. Therefore, it is an important issue for those skilled in the art to optimize the recipe of pilsner beer to make the pilsner beer not only reserve the high bitterness unit characteristics of European Lager beer, but also satisfy the taste requirements of the Chinese people to have the characteristics of bitterness, refreshment and sweetness after taste and no after taste bitterness, and to solve the problem of no bitter and refreshing type whole malt pilsner beer available in domestic.

Chinese patent publication document CN105087204B discloses a method for evaluating brewing characteristics of different hops in Lager beer brewing.

Germany patent application document DE102009023209A1 discloses a process for making a beverage with an ethanol content of less than 0.5% by volume.

D. E. Briggs ET AL: "Brewing: Science and Practice", 1 January 2004, XP055435010 discloses a brewing process of beers.

### SUMMARY

The present application provides a malt recipe of bitter and refreshing type whole malt pilsner beer, an obtained beer and a preparation method thereof. The beer not only reserves the high bitterness unit characteristics of the pilsner beer, but also has the characteristics of bitterness, refreshment and sweetness after taste, good bitterness coordination and no after taste bitterness, solving the problem of no bitter and refreshing type whole malt pilsner beer available in domestic.

In order to achieve the purpose, the present application provides a malt recipe of bitter and refreshing type whole malt pilsner beer, in the recipe, selected malt is pilsner malt and light-colored caramel malt, and selected hops have a proportion of cohumulone≤ 30% account for alpha acids present in the hops, wherein, the pilsner malt has a α-N content of 120-140mg/100g, a saccharification power of 250-300WK, a color of 2.5-4.5EBC and a malt limit fermentation degree of 67%-69%; the light-colored caramel malt has a color of 20-30EBC and a content of 2,5-dimethyl-4-hydroxyfuranone of 0.5-1.0 mg/L.

Preferably, the pilsner malt is mainly pilsner malt made from two-rowed barley, and the pilsner malt accounts for 90% to 99% of the selected malt, the light-colored caramel malt accounts for 1% to 10% of the selected malt.

The present application also provides a method for preparing a bitter and refreshing type whole malt pilsner beer using the malt recipe as described in the abovementioned technical solutions, comprises following steps:
selecting the pilsner malt, the light-colored caramel malt and water as main raw materials, and mixing the main raw materials in a ratio of substances to water of 1:3 to 1:4, then carrying out two-stage saccharification at 62 to 72°C;
filtering saccharified mash at 73±1 °C after the saccharification to obtain clear wort, and then boiling the clear wort; adding hops or hop extracts in batches during boiling, carrying out whirlpool after boiling, and cooling to 8 to 10°C and meanwhile inoculating lager yeast for fermentation while oxygenating, to obtain cellar beer;
filtering the cellar beer through kieselguhr and carrying out packaging and sterilization, to obtain the bitter and refreshing type whole malt pilsner beer.

Preferably, the two-stage saccharification comprises a first-stage saccharification at 62 to 65°C for 30 to 60 minutes and a second-stage saccharification at 71 to 73°C for 10 to 30 minutes, wherein, no exogenous enzyme preparations are added during entire saccharification process.

Preferably, the step of adding hops or hop extracts in batches during boiling specifically comprises:
adding the hops or hop extracts at a beginning of boiling, 15 min after boiling and 60 min after boiling, respectively.

Preferably, the step of filtering saccharified mash comprises steps of refluxing the saccharified mash and filtering after the wort is clear, wherein a ratio of a refluxing speed of the saccharified mash to an extracting speed after the saccharified mash is processed to be clear wort is 1:1 to 1:4.

Preferably, the hops or hop extracts are bitter hops, aroma hops or dual-purpose hops, the hops or hop extracts are selected from at least one of Hallertauer Tradition, Tettanger, Hersbrucker, Herkules, Saaz, Herkules, Magnum, Perle, Tettnanger, Nugget and Spalter Select.

Preferably, the step of inoculating the lager yeast for fermentation while oxygenating specifically comprises:
oxygenating the wort after the wort is whirlpooled and cooled, controlling oxygen dissolved in the wort to 9 to 11 mg/L, and inoculating the lager yeast to control a number of the lager yeast in a full tank at 15 million/ml to 18 million/ml, maintaining a main fermentation temperature at 8 to 11°C, a maturation temperature at 8 to 13°C, a fermentation time ≥15 days, a cold storage temperature at -2°C to 0°C, and a cold storage time ≥14 days.

The present application also provides a bitter and refreshing type whole malt pilsner beer prepared according to the method as described in the abovementioned technical solutions, the beer has an original wort concentration of 10.5 to 11.5°P, a bitterness unit of 20 to 30 EBC, a color of 6 to 9EBC, a real degree of fermentation of 65% to 68%, a proportion of isocohumulone ≤35% account for iso-alpha acids present in the beer, a content of total alcohols of 50 to 80mg/L and a content of total esters of 9 to 13mg/L.

Compared with the prior art, the present application has the following advantages and effects.

The bitter and refreshing type whole malt pilsner beer recipe provided in the present application has optimized the malt recipe and the hop recipe, which not only reserves the high bitterness unit characteristics of the pilsner beer, but also has the characteristics of bitterness, refreshment and sweetness after taste, good bitterness coordination and no after taste bitterness, solving the problem of no bitter type whole malt pilsner beer in domestic.

### DETAILED DESCRIPTION OF EMBODIMENTS

The technical solutions of the embodiments provided by the present application will be described clearly and completely below. Obviously, the described embodiments are only a part of the embodiments of the present application, rather than all the embodiments. Other embodiments obtained based on the embodiments of the present application by those of ordinary skill in the art without creative work shall fall within the scope of protection of the present application.

The embodiments of the present application provide a malt recipe of bitter and refreshing type whole malt pilsner beer. In the recipe, selected malt is pilsner malt and light-colored caramel malt, and hops have a proportion of cohumulone≤ 30% are selected, wherein, the pilsner malt has a α-N content of 120-140mg/100g, a saccharification power of 250-300WK, a color of 2.5-4.5EBC and a malt limit fermentation degree of 67%-69%; the light-colored caramel malt has a color of 20-30EBC and a content of 2,5-dimethyl-4-hydroxyfuranone (hereinafter referred to as DMHF) of 0.5-1.0 mg/L; a beer prepared by the recipe has an original wort concentration of 10.5-11.5°P and a bitterness unit of 20-30 EBC.

The pilsner beer provided in the above embodiments is made of whole malt, and the selected malt is mainly the pilsner malt made from two-rowed barley, together with the light-colored caramel malt, wherein the pilsner malt accounts for 90% to 99% of the selected malt, the light-colored caramel malt accounts for 1% to 10% of the selected malt; the proportion of the cohumulone in the selected hops is ≤30%, the lower the proportion of the cohumulone, the better the bitterness coordination. The hops can be single hops or a variety of mixed hops. In addition, the beer recipe does not need to use rice, corn and other auxiliary materials, and does not add exogenous enzyme preparations, combining with the specific malt requirements and requirements of the final wort concentration and bitterness, the prepared beer has the characteristics of bitterness, refreshment and sweetness after taste, good bitterness coordination and no after taste bitterness, solving the current situation of no bitter and refreshing type whole malt pilsner beer available in Chinese markets.

The embodiments of the present application further provide a method for preparing a bitter and refreshing type whole malt pilsner beer using the malt recipe described in the above embodiments, comprising following steps.

S1: Selecting the pilsner malt, the light-colored caramel malt and water as main raw materials, and mixing the main raw materials in a ratio of substances to water of 1:3 to 1:4 (i.e., a ratio of a total mass of the pilsner malt and the light-colored caramel malt to a mass of water), then carrying out two-stage saccharification at 62 to 72°C.

In this step, when the malt is mixed with water, the requirements for feeding temperatures of the malt are different, that is, dry milled malt is fed at 50 to 55°C, and wet milled malt is fed at 62 to 65°C, to ensure that the milled malts are fully utilized. In addition, the saccharification process is optimized to the two-stage saccharification in this step, which can not only ensure decomposition of starch, but also can facilitate the control of the limit fermentation degree of wort.

S2: Filtering saccharified mash at 73±1°C after saccharification to obtain clear wort, and then boiling the clear wort; adding hops or hop extracts in batches during boiling, carrying out whirlpool after boiling, and cooling to 8 to 10°C and meanwhile inoculating lager yeast for fermentation while oxygenating, to obtain cellar beer.

In this step, the saccharified mash is filtered by refluxing before filtering, to ensure that suspended substances in the saccharified mash are fully precipitated and separated. The concentration of the mixed wort after filtration is 9.0-10.5°P. In addition, in order to ensure full use of hop substances, the hops or hop extracts are added in batches, preferably the hops or hop extracts are added at the beginning of boiling, 15 min after boiling and 60 min after boiling respectively. Furthermore, after the hops are added, in order to achieve the required hop aroma, the pump is still turned on for circulation for 0 to 10 min after boiling to stop steam for the reflux process, and then whirlpool is carried out. The time for cyclotron can be adjusted appropriately depending on the cyclotron effect, preferably 20 min to 30 min, at this time, the concentration of the obtained wort is 10.5 to 11.5°P.

S3: Filtering the cellar beer through kieselguhr and carrying out packaging and sterilization, to obtain a bitter and refreshing type whole malt pilsner beer.

In a preferred embodiment, the two-stage saccharification comprises a first-stage saccharification at 62 to 65°C for 30 to 60 minutes and a second-stage saccharification at 71 to 73°C for 10 to 30 minutes, wherein, no exogenous enzyme preparations are added during the entire saccharification process. In this embodiment, the optimized two-stage saccharification process can not only ensure the decomposition of starch, but also facilitate the control of the limit fermentation degree of the wort. Through the above adjustment, the limit fermentation degree of the wort can be controlled between 67% and 69%, to ultimately achieve that the beer products have a real degree of fermentation (hereinafter referred to as RDF) between 65% and 68% and an apparent extract between 1.8°P and 2.3°P.

In a preferred embodiment, filtering the saccharified mash comprises the steps of refluxing the saccharified mash and filtering after the wort is clear, wherein a ratio of a refluxing speed of the saccharified mash to an extracting speed after the saccharified mash is processed to be clear wort is 1:1 to 1:4. In this embodiment, in order to ensure that the boiled wort is clear wort to the greatest extent, the method of refluxing before filtering is used when filtering the saccharified mash, and the refluxing speed of the saccharified mash and the extracting speed after the saccharified mash is processed to be clear wort are defined. It is understood that the speed ratio can be adjusted within the above range according to the actual production conditions.

In a preferred embodiment, the hops or hop extracts are bitter hops, aroma hops or dual-purpose hops, the hops or hop extracts are selected from at least one of Hallertauer Tradition, Tettanger, Hersbrucker, Herkules, Saaz, Herkules, Magnum, Perle, Tettnanger, Nugget and Spalter Select. The selected hops listed in this embodiment are all low-protein hops. When selecting, hops with a proportion of cohumulone greater than 30% and hops with a proportion of cohumulone less than 30% are usually mixed, as long as ultimately ensure that the proportion of cohumulone is less than or equal to 30% in the recipe, it is because that the lower the proportion of cohumulone is, the better the bitterness coordination is, to facilitate the final beer products to have the characteristics of bitterness, refreshment and sweetness after taste, good bitterness coordination, and no after taste bitterness.

In a preferred embodiment, the step of inoculating the lager yeast for fermentation while oxygenating specifically comprises:
oxygenating the wort after the wort is whirlpooled and cooled, controlling oxygen dissolved in the wort to 9 to 11 mg/L, and inoculating the lager yeast to control a number of the lager yeast in a full tank at 15 million/ml to 18 million/ml, maintaining a main fermentation temperature at 8 to 11°C, a maturation temperature at 8 to 13°C, a fermentation time ≥15 days, a cold storage temperature at -2°C to 0°C, and a cold storage time ≥14 days. In this embodiment, the parameter conditions involved in the step of inoculating the lager yeast for fermentation while oxygenating are defined, to ensure that the product obtained after fermentation is the expected product. It is understood that the definition of the above parameter conditions can be slightly adjusted within the above defined ranges according to the actual production conditions.

The embodiments of the present application further provide a bitter and refreshing type whole malt pilsner beer prepared according to the above method. The beer has an original wort concentration of 10.5 to 11.5°P, a bitterness unit of 20 to 30 EBC, a color of 6 to 9EBC and a RDF of 65% to 68%, and a proportion of isocohumulone ≤35%, a content of total alcohols of 50 to 80mg/L and a content of total esters of 9 to 13mg/L, so that it not only reserves the high bitterness unit characteristics of the pilsner beer, but also has the characteristics of bitterness, refreshment and sweetness after taste, good bitterness coordination and no after taste bitterness, solving the problem of no bitter and refreshing type whole malt pilsner beer available in domestic.

In order to describe the bitter and refreshing type whole malt pilsner beer malt recipe, obtained beer and preparation method thereof provided in the embodiments of the present application more clearly, it will be described in conjunction with specific embodiments in the following text.

### Embodiment 1

Barley malts (French wheat Sebastian pilsner malt 30%-49%, French wheat Quench pilsner malt 25%-30%, Canadian wheat Copeland pilsner malt 25%-30%, light-colored caramel malt CaraHell 1%-10% ) and water were selected as the main raw materials, after carrying out the processes of crushing → saccharification → filtration → boiling (hops Hallertauer Tradition 36%, Hersbrucker 64%) → whirlpool → cooling → oxygenating → inoculating lager yeast → fermentation → filtration → sterilization, 10.5°P bitter and refreshing type whole malt pilsner beer was obtained.

### Embodiment 2

Barley malts (French wheat Sebastian pilsner malt 30%-49%, French wheat Quench pilsner malt 25%-30%, Canadian wheat Copeland pilsner malt 25%-30%, light-colored caramel malt CaraHell 1%-10% ) and water were selected as the main raw materials, after carrying out the processes of crushing → saccharification → filtration → boiling (hops Hallertauer Tradition 100%) → whirlpool → cooling → oxygenating → inoculating lager yeast → fermentation → filtration → sterilization, 10.5°P bitter and refreshing type whole malt pilsner beer was obtained.

### Embodiment 3

Barley malts (French wheat Irina pilsner malt 65%-69%, Canadian wheat Copeland pilsner malt 25%-30%, light-colored caramel malt CaraHell 1%-10% ) and water were selected as the main raw materials, after carrying out the processes of crushing → saccharification → filtration → boiling (hops Hallertauer Tradition 36%, Hersbrucker 64%) →whirlpool → cooling→ oxygenating → inoculating lager yeast → fermentation → filtration → sterilization, 10.5°P bitter and refreshing type whole malt pilsner beer was obtained.

### Embodiment 4

Barley malts (French wheat Irina pilsner malt 65%-69%, Canadian wheat Copeland pilsner malt 25%-30%, light-colored caramel malt CaraHell 1%-10% ) and water were selected as the main raw materials, after carrying out the processes of crushing → saccharification → filtration → boiling (hops Hallertauer Tradition 100%) → whirlpool → cooling → oxygenating → inoculating lager yeast → fermentation → filtration → sterilization, 10.5°P bitter and refreshing type whole malt pilsner beer was obtained.

### Embodiment 5

Barley malts (French wheat Irina pilsner malt 65%-69%, Canadian wheat Copeland pilsner malt 25%-30%, light-colored caramel malt CaraHell 1%-10%) and water were selected as the main raw materials, after carrying out the processes of crushing → saccharification → filtration → boiling (hops Hallertauer Tradition 100%) → whirlpool → cooling → oxygenating → inoculating lager yeast → fermentation → filtration → sterilization, 11.5°P bitter and refreshing type whole malt pilsner beer was obtained.

### Physical and chemical testing of bitter and refreshing type whole malt pilsner beer

**Table 1 Partial physical and chemical testing results of the malts used in Embodiments 1 to 5**

| Item | Embodiment s 1 to 2 | Embodiment s 1 to 5 | Embodiment s 3 to 5 | Embodiment s 1 to 5 |
|---|---|---|---|---|
| | Sebastian | CaraHell | Irina | Copeland |
| Color | 3.9 | 25 | 3.5 | 3.5 |
| α-N mg/100g | 139 | / | 140 | 140 |
| Limit fermentation degree% | 69 | / | 68 | 69 |
| Saccharification power WK | 300 | / | 262 | 310 |
| DMHF mg/L | / | 0.68 | / | / |

**Table 2 Physical and chemical testing results of the hops used in Embodiments 1 to 5**

| Item | Hallertauer Tradition | Hersbrucker |
|---|---|---|
| Proporation of cohumulone, % | 29 | 19 |

**Table 3 Test results of bitter and refreshing type whole malt pilsner beers prepared in Embodiments 1 to 5**

| Item | Embodime nt 1 | Embodime nt 2 | Embodime nt 3 | Embodime nt 4 | Embodime nt 5 |
|---|---|---|---|---|---|
| Original wort concentratio n | 10.5°P | 10.5°P | 10.5°P | 10.5°P | 11.5°P |
| Bitterness unit | 22.5 | 21.6 | 20 | 20.7 | 25 |
| Proportion of isocohumulo ne | 32.26 | 34.64 | 30.03 | 35 | 34.96 |
| RDF | 66.2% | 66.8% | 65.3% | 65.6% | 65% |

As shown from the data in Tables 1 and 2, the hops and malts used in Embodiments 1 to 5 of the present application conformed to the set standards in the recipe of bitter and refreshing type whole malt pilsner beer. According to Table 3, based on the definitions of the selected components in the recipe, the prepared bitter and refreshing type whole malt pilsner beer had an original wort concentration of 10.5-11.5°P, a bitterness unit of 20-30EBC, and a proportion of isocohumulone in the beer≤35 %, and a RDF of 65% to 68%, all of which conformed to the expected requirements of the bitter and refreshing type whole malt pilsner beer. For pilsner beer, the lower the proportion of isocohumulone, the better the quality of the bitterness of the beer, i.e., the bitterness was strong, but no after taste bitterness. The RDF affects the residual sugar in the beer; with too much residual sugar, and the beer is mellow without refreshing; with too little residual sugar, the beer is boring, so the RDF was controlled at 65% to 68%, with the best refreshment of beer.

### Flavor evaluation

Flavor evaluation tests were conducted for the bitter and refreshing type whole malt pilsner beer obtained in above embodiments 1 to 5. Results were shown in Table 4.

**Table 4 Flavor evaluation results of the bitter and refreshing type whole malt pilsner beer obtained in embodiments 1 to 5**

| Embodiments | Embodiment 1 | Embodiment 2 | Embodiment 3 | Embodiment 4 | Embodiment 5 |
|---|---|---|---|---|---|
| Evaluation results | Obvious wheat fragrance, bitterness coordination, no after taste bitterness, refreshing, sweet after taste | Obvious wheat fragrance, bitterness coordination, no after taste bitterness, refreshing, sweet after taste | Obvious wheat fragrance, bitterness coordination, no after taste bitterness, refreshing, sweet after taste | Obvious wheat fragrance, bitterness coordination, no after taste bitterness, refreshing, sweet after taste | Obvious wheat fragrance, bitterness coordination, no after taste bitterness, refreshing, sweet after taste |

As shown from Table 4, the whole malt pilsner beers provided in the embodiments of the present application have the characteristics of bitterness, refreshment and sweetness after taste, good bitterness coordination, and no after taste bitterness. Since Chinese consumers have relatively low tolerance to bitterness, the bitter and refreshing type whole malt pilsner beer provided in the embodiments of the present application not only reserves the high bitterness unit characteristics of the European Lager beer, but also meets the taste requirements of Chinese people and has the characteristics of bitterness, refreshment and sweetness after taste and no after taste bitterness, solving the problem of no bitter and refreshing type whole malt pilsner beer available in domestic.

## Claims

1. A malt recipe of bitter and refreshing type whole malt pilsner beer, **characterized in that**, in the recipe, selected malt is pilsner malt and light-colored caramel malt, and selected hops have a proportion of cohumulone≤ 30% account for alpha acids present in the hops, wherein, the pilsner malt has a α-N content of 120-140mg/100g, a saccharification power of 250-300WK, a color of 2.5-4.5EBC and a malt limit fermentation degree of 67%-69%; the light-colored caramel malt has a color of 20-30EBC and a content of 2,5-dimethyl-4-hydroxyfuranone of 0.5-1.0 mg/L.

2. The malt recipe of bitter and refreshing type whole malt pilsner beer according to claim 1, **characterized in that**, the pilsner malt is mainly pilsner malt made from two-rowed barley, and the pilsner malt accounts for 90% to 99% of the selected malt, the light-colored caramel malt accounts for 1% to 10% of the selected malt.

3. A method for preparing a bitter and refreshing type whole malt pilsner beer using the malt recipe according to claim 1 or claim 2, **characterized in that**, comprises following steps:
selecting the pilsner malt, the light-colored caramel malt and water as main raw materials, and mixing the main raw materials in a ratio of substances to water of 1:3 to 1:4, then carrying out two-stage saccharification at 62 to 72°C;
filtering saccharified mash at 73±1°C after the saccharification to obtain clear wort, and then boiling the clear wort; adding hops or hop extracts in batches during boiling, carrying out whirlpool after boiling, and cooling to 8 to 10°C and meanwhile inoculating lager yeast for fermentation while oxygenating, to obtain cellar beer;
filtering the cellar beer through kieselguhr and carrying out packaging and sterilization, to obtain the bitter and refreshing type whole malt pilsner beer.

4. The method according to claim 3, **characterized in that**, the two-stage saccharification comprises a first-stage saccharification at 62 to 65°C for 30 to 60 minutes and a second-stage saccharification at 71 to 73°C for 10 to 30 minutes, wherein, no exogenous enzyme preparations are added during entire saccharification process.

5. The method according to claim 3, **characterized in that**, the step of adding hops or hop extracts in batches during boiling specifically comprises:
adding the hops or hop extracts at a beginning of boiling, 15 min after boiling and 60 min after boiling, respectively.

6. The method according to claim 3, **characterized in that**, the step of filtering saccharified mash comprises steps of refluxing the saccharified mash and filtering after the wort is clear, wherein a ratio of a refluxing speed of the saccharified mash to an extracting speed after the saccharified mash is processed to be clear wort is 1:1 to 1:4.

7. The method according to claim 3, **characterized in that**, the hops or hop extracts are bitter hops, aroma hops or dual-purpose hops, the hops or hop extracts are selected from at least one of Hallertauer Tradition, Tettanger, Hersbrucker, Herkules, Saaz, Herkules, Magnum, Perle, Tettnanger, Nugget and Spalter Select.

8. The method according to claim 3, **characterized in that**, the step of inoculating the lager yeast for fermentation while oxygenating specifically comprises:
oxygenating the wort after the wort is whirlpooled and cooled, controlling oxygen dissolved in the wort to 9 to 11 mg/L, and inoculating the lager yeast to control a number of the lager yeast in a full tank at 15 million/ml to 18 million/ml, maintaining a main fermentation temperature at 8 to 11°C, a maturation temperature at 8 to 13°C, a fermentation time ≥15 days, a cold storage temperature at -2°C to 0°C, and a cold storage time ≥14 days.

9. A bitter and refreshing type whole malt pilsner beer prepared according to any one of claims 3-8, **characterized in that**, the beer has an original wort concentration of 10.5 to 11.5°P, a bitterness unit of 20 to 30 EBC, a color of 6 to 9EBC, a real degree of fermentation of 65% to 68%, a proportion of isocohumulone ≤35% account for iso-alpha acids present in the beer, a content of total alcohols of 50 to 80mg/L and a content of total esters of 9 to 13mg/L.

## Patentansprüche

1. Malzrezeptur für Pilsner Vollmalzbier der bitteren und erfrischenden Art, **dadurch gekennzeichnet, dass** in der Rezeptur ausgewähltes Malz Pilsner Malz und helles Karamellmalz ist und ausgewählter Hopfen einen Anteil von Cohumulon ≤30 % aufweist, der in dem Hopfen vorhandene Alphasäuren ausmacht, wobei das Pilsner Malz einen α-N-Gehalt von 120-140 mg/100 g, eine Verzuckerungsleistung von 250-300 WK, eine Farbe von 2,5-4,5 EBC und einen Malzgrenzvergärungsgrad von 67 %-69 % aufweist, das helle Karamellmalz eine Farbe von 20-30 EBC und einen Gehalt an 2,5-Dimethyl-4-hydroxyfuranon von 0,5-1,0 mg/l aufweist.

2. Malzrezeptur für Pilsner Vollmalzbier der bitteren und erfrischenden Art nach Anspruch 1, **dadurch gekennzeichnet, dass** das Pilsner Malz hauptsächlich aus zweizeiliger Gerste hergestelltes Pilsner Malz ist und das Pilsner Malz 90 % bis 99 % des ausgewählten Malzes ausmacht, das helle Karamellmalz 1 % bis 10 % des ausgewählten Malzes ausmacht.

3. Verfahren zum Herstellen eines Pilsner Vollmalzbiers der bitteren und erfrischenden Art unter Verwendung der Malzrezeptur nach Anspruch 1 oder 2, **dadurch gekennzeichnet, dass** es die folgenden Schritte umfasst:
Auswählen des Pilsner Malzes, des hellen Karamellmalzes und des Wassers als Hauptrohstoffe und Mischen der Hauptrohstoffe in einem Verhältnis von Stoffen zu Wasser von 1 : 3 bis 1 : 4, dann Ausführen einer zweistufigen Verzuckerung bei 62 bis 72 °C;
Filtrieren der verzuckerten Maische bei 73±1 °C nach der Verzuckerung, um eine klare Würze zu erhalten, und dann Kochen der klaren Würze; Zugeben von Hopfen oder Hopfenextrakten in Chargen während des Kochens, Durchführen einer Verwirbelung nach dem Kochen und Abkühlen auf 8 bis 10 °C und zwischenzeitliches Beimpfen von Lagerhefe für die Gärung unter Sauerstoffzufuhr, um Kellerbier zu erhalten;
Filtrieren des Kellerbiers durch Kieselgur und Ausführen der Verpackung und Sterilisation, um das Pilsner Vollmalzbier der bitteren und erfrischenden Art zu erhalten.

4. Verfahren nach Anspruch 3, **dadurch gekennzeichnet, dass** die zweistufige Verzuckerung eine erste Verzuckerungsstufe bei 62 bis 65 °C für 30 bis 60 Minuten und eine zweite Verzuckerungsstufe bei 71 bis 73 °C für 10 bis 30 Minuten umfasst, wobei während des gesamten Verzuckerungsprozesses keine exogenen Enzympräparate zugegeben werden.

5. Verfahren nach Anspruch 3, **dadurch gekennzeichnet, dass** der Schritt des chargenweisen Zugebens von Hopfen oder Hopfenextrakten während des Kochens insbesondere umfasst:
Zugeben des Hopfens oder der Hopfenextrakte zu Beginn des Kochens, 15 Minuten nach dem Kochen beziehungsweise 60 Minuten nach dem Kochen.

6. Verfahren nach Anspruch 3, **dadurch gekennzeichnet, dass** der Schritt des Filtrierens der verzuckerten Maische die Schritte des Rückflusses der verzuckerten Maische und des Filtrierens umfasst, nachdem die Würze klar ist, wobei ein Verhältnis der Rückflussgeschwindigkeit der verzuckerten Maische zu einer Extraktionsgeschwindigkeit nach der Verarbeitung der verzuckerten Maische zu klarer Würze 1 : 1 bis 1 : 4 beträgt.

7. Verfahren nach Anspruch 3, **dadurch gekennzeichnet, dass** der Hopfen oder die Hopfenextrakte Bitterhopfen, Aromahopfen oder Zweinutzungshopfen sind, wobei der Hopfen oder die Hopfenextrakte aus wenigstens einer von Hallertauer Tradition, Tettanger, Hersbrucker, Herkules, Saaz, Herkules, Magnum, Perle, Tettnanger, Nugget und Spalter Select ausgewählt sind.

8. Verfahren nach Anspruch 3, **dadurch gekennzeichnet, dass** der Schritt des Beimpfens der Lagerhefe für die Gärung unter Sauerstoffzufuhr insbesondere umfasst: Sauerstoffanreichern der Würze, nachdem die Würze gewirbelt und gekühlt wurde, Kontrollieren des in der Würze gelösten Sauerstoffs auf 9 bis 11 mg/l, und Beimpfen der Lagerhefe, um die Anzahl der Lagerhefe in einem vollen Tank auf 15 Millionen/ml bis 18 Millionen/ml zu kontrollieren, Aufrechterhalten einer Hauptgärungstemperatur von 8 bis 11 °C, einer Reifungstemperatur von 8 bis 13 °C, einer Gärungszeit von ≥15 Tagen, einer Kühllagertemperatur von -2 °C bis 0 °C und einer Kühllagerzeit von ≥14 Tagen.

9. Pilsner Vollmalzbier der bitteren und erfrischenden Art, hergestellt nach einem der Ansprüche 3-8, **dadurch gekennzeichnet, dass** das Bier eine Stammwürzenkonzentration von 10,5 bis 11,5 °P, eine Bitterkeitseinheit von 20 bis 30 EBC, eine Farbe von 6 bis 9 EBC, einen realen Vergärungsgrad von 65 % bis 68 %, einen Anteil von Isocohumulon von ≤35 %, der die in dem Bier vorhandenen Iso-alpha-Säuren ausmacht, einen Gehalt an Gesamtalkoholen von 50 bis 80 mg/l und einen Gehalt an Gesamtestern von 9 bis 13 mg/l aufweist.

## Revendications

1. Recette de malt de bière pilsner au malt entier de type amer et rafraîchissant, **caractérisée en ce que**, dans la recette, le malt sélectionné est du malt pilsner et du malt caramel de couleur claire, et les houblons sélectionnés ont une proportion de cohumulone ≤ 30 % constituant les acides alpha présents dans le houblon, dans lequel le malt pilsner a une teneur en α-N de 120 à 140 mg/100g, un pouvoir de saccharification de 250 à 300 WK, une couleur de 2,5 à 4,5 EBC et un degré de fermentation limite du malt de 67% à 69% ; le malt caramel de couleur claire a une couleur de 20 à 30 EBC et une teneur en 2,5-diméthyl-4-hydroxyfuranone de 0,5 à 1,0 mg/L.

2. Recette de malt de bière pilsner au malt entier de type amer et rafraîchissant selon la revendication 1, **caractérisée en ce que**, le malt pilsner est majoritairement du malt pilsner issu d'orge à deux rangs, et le malt pilsner représente 90% à 99% du malt sélectionné, le malt caramel de couleur claire représente 1% à 10% du malt sélectionné.

3. Procédé de préparation d'une bière pilsner au malt entier de type amer et rafraîchissant utilisant la recette de malt selon la revendication 1 ou la revendication 2, **caractérisé en ce que**, le procédé comprend les étapes suivantes consistant à :
sélectionner le malt pilsner, le malt caramel de couleur claire et l'eau comme matières premières principales, et mélanger les matières premières principales dans un rapport substances par rapport à l'eau de 1 : 3 à 1 : 4, puis réaliser une saccharification en deux étapes à 62 à 72°C ;
filtrer la purée saccharifiée à 73 ± 1°C après la saccharification pour obtenir un moût clair, puis faire bouillir le moût clair; ajouter des houblons ou des extraits de houblon par lots pendant l'ébullition, réaliser un tourbillon après l'ébullition et le refroidissement à 8 à 10°C et pendant ce temps inoculer la levure de bière pour la fermentation tout en oxygénant, pour obtenir une bière de cave ;
filtrer la bière de cave à travers le kieselguhr et procéder à l'emballage et à la stérilisation, pour obtenir la bière pilsner au type malt entier de type amer et rafraîchissant.

4. Procédé selon la revendication 3, **caractérisé en ce que** la saccharification en deux étapes comprend une saccharification de première étape à 62 à 65°C pendant 30 à 60 minutes et une saccharification de seconde étape à 71 à 73°C pendant 10 à 30 minutes, dans lequel aucune préparation enzymatique exogène n'est ajoutée pendant tout le processus de saccharification.

5. Procédé selon la revendication 3, **caractérisé en ce que**, l'étape d'ajout de houblons ou d'extraits de houblon par lots lors de l'ébullition comprend notamment :
l'ajout des houblons ou extraits de houblon en début d'ébullition, 15 minutes après l'ébullition et 60 minutes après l'ébullition, respectivement.

6. Procédé selon la revendication 3, **caractérisé en ce que** l'étape de filtration de la purée saccharifiée comprend des étapes de reflux de la purée saccharifiée et de filtration après que le moût soit clair, dans lequel un rapport d'une vitesse de reflux de la purée saccharifiée par rapport à une vitesse d'extraction après que la purée saccharifiée soit transformée en moût clair est de 1 : 1 à 1 : 4.

7. Procédé selon la revendication 3, **caractérisé en ce que**, les houblons ou extraits de houblon sont des houblons amers, des houblons aromatiques ou des houblons à double usage, les houblons ou extraits de houblon sont choisis parmi au moins un parmi Hallertauer Tradition, Tettanger, Hersbrucker, Herkules, Saaz, Herkules, Magnum, Perle, Tettnanger, Nugget et Spalter Select.

8. Procédé selon la revendication 3, **caractérisé en ce que** l'étape d'inoculation de la levure de bière pour la fermentation tout en oxygénant comprend spécifiquement :
l'oxygénation du moût après que le moût a été tourbillonné et refroidi, le contrôle de l'oxygène dissous dans le moût à 9 à 11 mg/ L, et l'inoculation de la levure de bière pour contrôler un nombre de levures de bière dans une cuve pleine à 15 millions/ml à 18 millions/ml, en maintenant une température de fermentation principale à 8 à 11°C, une température de maturation à 8 à 13°C, un temps de fermentation ≥ 15 jours, une température de stockage au froid de -2°C à 0°C et un temps de stockage au froid ≥ 14 jours.

9. Bière pilsner au malt entier de type amer et rafraîchissant préparée selon l'une quelconque des revendications 3 à 8, **caractérisée en ce que** la bière a une concentration de moût d'origine de 10,5 à 11,5°P, une unité d'amertume de 20 à 30 EBC, une couleur de 6 à 9 EBC, un degré réel de fermentation de 65% à 68%, une proportion d'isocohumulone ≤ 35% constituant les acides iso-alpha présents dans la bière, une teneur en alcools totaux de 50 à 80 mg/L et une teneur en esters totaux de 9 à 13 mg/L.
